# EUROPÄISCHE PATENTANMELDUNG

(11) **EP 0 587 242 A2**
(43) Veröffentlichungstag der Anmeldung: **16.03.1994**
(21) Anmeldenummer: 93202582.8
(22) Anmeldetag: 03.09.1993
(51) Int. Cl.: H04M 3/50

(54) **Auskunftsvorrichtung**

(30) Priorität: 10.09.1992 DE 4230277
(71) Anmelder: Philips Patentverwaltung GmbH, 22335 Hamburg (DE); Philips Electronics N.V., 5621 BA Eindhoven (NL)
(72) Erfinder: Gantner, Lothar, c/o Philips Patentverwaltung GmbH, D-20097 Hamburg (DE); Danzer, Werner c/o Philips Patentverwaltung GmbH, D-20097 Hamburg (DE); Kratschmeyer, Günther c/o Philips, D-20097 Hamburg (DE); Ehrlinger, Dagmar c/o Philips, D-20097 Hamburg (DE); Häussler, Rolf c/o Philips Patentverwaltung GmbH, D-20097 Hamburg (DE)
(74) Vertreter: Volmer, Georg, Dipl.-Ing.

(57) **Zusammenfassung**

Die Erfindung bezieht sich auf eine Auskunftsvorrichtung (1) mit einer Vermittlungsstelle (4) und einer Informationsverarbeitungsschaltung (5). Die Vermittlungsstelle (4) ist zur Kopplung wenigstens eines Teilnehmerendgeräts (3) mit entweder einem Auskunftsendgerät (6) und/oder einer Sprachausgabeschaltung (14) vorgesehen. Die Informationsverarbeitungsschaltung (5) ist über eine Steuerverbindung (11) mit der Vermittlungsstelle (4) gekoppelt, zur Auswertung von von wenigstens einer Auskunftsein- und -ausgabevorrichtung (7) eingegebenen Daten, zur Bildung von wenigstens einer Ansageinformation für das Teilnehmerendgerät (3) und zur Zuführung der Ansageinformation zur Vermittlungsstelle (4) vorgesehen. Die Informationsverarbeitungsschaltung (4) ist weiter zur Einfügung einer Ansagekennung und/oder von Parametern in einen Meldungsblock vorgesehen. Die Vermittlungsstelle (4) ist noch nach Auswertung eines Meldungsblocks anhand der Ansagekennung und/oder der Parameter zur Bildung einer Ansageabfolge und zur Zuführung der Ansageabfolge zur in der Vermittlungsstelle (4) enthaltenen Sprachausgabeschaltung (14) vorgesehen. Die Sprachausgabeschaltung (14) dient zur Zusammenfügung von Sprachfragmenten zu einem Sprachsignal nach der Bildungsvorschrift in der Ansageabfolge.

## Beschreibung

Die Erfindung bezieht sich auf eine Auskunftsvorrichtung mit einer Vermittlungsstelle, die zur Kopplung wenigstens eines Teilnehmerendgeräts mit entweder einem Auskunftsendgerät und/oder einer Sprachausgabeschaltung vorgesehen ist und mit einer Informationsverarbeitungsschaltung, die
- über eine Steuerverbindung mit der Vermittlungsstelle gekoppelt ist,
- zur Auswertung von von wenigstens einer Auskunftsein- und -ausgabevorrichtung eingegebenen Daten,
- zur Bildung von wenigstens einer Ansageinformation für das Teilnehmerendgerät und
- zur Zuführung der Ansageinformation zur Vermittlungsstelle vorgesehen ist.

Aus dem Aufsatz "Platzansteuerungstechnik für Telefonauskunftsstellen" von Joachim Göldenitz, Unterrichtsblätter F, Jg 42/1989, Nr. 9, Seiten 287 bis 295, ist eine solche Auskunftsvorrichtung mit einer Vermittlungsstelle und einer Informationsverarbeitungsschaltung bekannt. Die Vermittlungsstelle stellt über ein Nachrichtennetz eine Kopplung mit Teilnehmerendgeräten von auskunftsuchenden Teilnehmern und Auskunftsendgeräten von Auskunftsplätzen her. Nachdem die Auskunftskraft den gesuchten Teilnehmer in eine Auskunftsein- und -ausgabevorrichtung (z. B. Terminal) eingegeben hat, wird von der Informationsverarbeitungsschaltung die gesuchte Rufnummer (Ansageinformation) aus ihrem Speicher (Datenbank) ermittelt und einer Sprachausgabeschaltung zugeführt. Die Informationsverarbeitungsschaltung gibt noch über eine Steuerverbindung zur Vermittlungsstelle die Steueranweisung, daß die Sprachausgabeschaltung mit dem Teilnehmerendgerät gekoppelt wird. Das von der Sprachausgabeschaltung ausgegebene Sprachsignal wird der Vermittlungsstelle zugeführt. Der Sprachausgabebaustein wird also von der Informationsverarbeitungsschaltung gesteuert. Des weiteren ist aus dem Aufsatz die Möglichkeit (Seite 290, Kapitel 5.2) bekannt, die Rufnummer über die Steuerverbindung der Vermittlungsstelle zuzuführen und die Vermittlungsstelle die Sprachausgabe vornehmen zu lassen. Wie die Sprachausgabe durchgeführt wird, ist nicht beschrieben.

Der Erfindung liegt die Aufgabe zugrunde, eine Auskunftsvorrichtung der eingangs genannten Art zu schaffen, die mit weniger Hardware-Aufwand eine flexible und leicht änderbare Sprachausgabe durchführt.

Die Aufgabe wird bei einer Auskunftsvorrichtung der Eingangs genannten Art, dadurch gelöst,
daß die Informationsverarbeitungsschaltung zur Einfügung einer Ansagekennung und/oder von Parametern in einen Meldungsblock vorgesehen ist,
daß die Vermittlungsstelle nach Auswertung eines Meldungsblocks anhand der Ansagekennung und/oder der Parameter zur Bildung einer Ansageabfolge und zur Zuführung der Ansageabfolge zur in der Vermittlungsstelle enthaltenen Sprachausgabeschaltung vorgesehen ist und
daß die Sprachausgabeschaltung zur Zusammenfügung von Sprachfragmenten zu einem Sprachsignal nach der Bildungsvorschrift in der Ansageabfolge vorgesehen ist.

Bei der erfindungsgemäßen Auskunftsvorrichtung ist die Sprachausgabeschaltung Bestandteil der Vermittlungsstelle. Zwischen der Vermittlungsstelle und der Informationsverarbeitungsschaltung werden über die Steuerverbindung Steuerinformationen und auch Ansageinformationen übermittelt. Aufgrund der über die Steuerverbindung auch gegebenen Steuerinformationen muß die Ansageinformation von der Informationsverarbeitungsschaltung geeignet übertragen und gekennzeichnet werden. Hierzu dient ein Meldungsblock. Mit dem Meldungsblock wird eine Ansagekennung und gegebenenfalls Parameter (z.B. eine Rufnummer) übertragen. Eine solche Ansagekennung kennzeichnet Typen von Ansagetexten. Aus der Ansagekennung wird in der Vermittlungsstelle eine Ansageabfolge gebildet, die Ansageabfolgeteile enthält. Ein Parameter kennzeichnet ein variables Ansageabfolgeteil, d.h. variable Ziffern, Buchstaben und/oder Textteile. Die festen Ansageabfolgeteile kennzeichnen Sprachfragmente oder Textteile die in einer Sprachausgabeschaltung zu einem Sprachsignal zusammengesetzt werden. Beispielsweise kann, wenn die Informationsverarbeitungsschaltung die gesuchte Rufnummer nicht ermitteln konnte, die Ansagekennung "00" lauten. Die Vermittlungsstelle setzt anhand der Ansagekennung eine Ansageabfolge aus mehreren Ansageabfolgeteilen zusammen. Bei einer Ansagekennung "00" sind z.B. die Ansageabfolgeteile "KE" und "WA" in der Ansagefolge enthalten. In dem Sprachausgabebaustein werden daraus die Textteile "für den betreffenden Teilnehmer ist leider kein Eintrag vorhanden" und "falls Sie weitere Auskünfte wünschen, bleiben Sie bitte am Telefon" gebildet. Die Ansagekennung gibt also den Typ einer Ansageabfolge vor. Das Sprachsignal, welches dem Teilnehmerendgerät zuführbar ist, wird also in der Sprachausgabeschaltung aus der Ansageabfolge gebildet. In der Ansageabfolge können außerdem Codewörter für Sprachfragmente für die Ziffern der Rufnummer vorhanden sein. Beispielsweise kann für die Ziffer 1 in der Ansageabfolge das Codewort "160" enthalten sein.

Dadurch, daß die Ansageinformation mit Parametern (z.B. Rufnummern) über die schon vorhandene Steuerverbindung der Vermittlungsstelle zugeführt wird, wird der bisher notwendige Hardwareaufwand durch eine zusätzliche Verbindung zu einer Sprachausgabeschaltung vermieden.

In der Informationsverarbeitungsschaltung ist eine erste Steuerschaltung enthalten, die zur Entnahme von Parametern aus einem Speicher und zur Bildung eines Meldungsblocks vorgesehen ist. Parameter können nur dann aus dem Speicher geholt werden, wenn diese dort gespeichert sind. Ein solcher Meldungsblock kann außer der Ansagekennung und dem Parameter auch das Ziel des Meldungsblocks und die Meldungsart (z.B. Rufnummernübermittlung) enthalten.

In der Vermittlungsstelle ist eine zweite Steuerschaltung vorhanden, die zur Auswertung des von der Informationsverarbeitungsschaltung empfangenen Meldungsblocks, zur Bildung einer Ansageabfolge mit wenigstens einem festen und/oder einem variablen Ziffern, Buchstaben und Textteile enthaltenen Ansageabfolgeteils und zur Zuführung der Ansageabfolge zur Sprachausgabeschaltung dient. Nach der Auswertung des Meldungsblocks wird eine Ansageabfolge in der zweiten Steuerschaltung gebildet. Diese Ansageabfolge enthält feste Ansageabfolgeteile und variable Ansageabfolgeteile. In den festen Ansageabfolgeteilen sind Ansageabfolgeteile enthalten, die beispielsweise den Text "ich wiederhole" codieren. In dem variablen Ansageabfolgeteil sind beispielsweise Ziffern einer Rufnummer enthalten. In der Sprachausgabeschaltung wird aus den Ansageabfolgeteilen ein Sprachsignal gebildet. Die in der zweiten Steuerschaltung gebildeten festen und variablen Ansageabfolgeteilen können mehrfach und in beliebiger Reihenfolge auftreten.

Um für den Teilnehmer, der beispielsweise eine Rufnummer sucht, die Ansage im Sprachsignal verständlicher zu gestalten, werden von der Sprachausgabeschaltung im Sprachsignal betonte Ziffern eingefügt. Die zweite Steuerschaltung ist daher zur Ermittlung der Positionen wenigstens der Ziffern und/oder Buchstaben der Parameter und zur Bildung des variablen Ansageabfolgeteils zusätzlich mit Informationen über die vorzunehmende von der Position einer Ziffer abhängigen Betonung vorgesehen. Eine Ziffer soll eine Betonung aufweisen, die abhängig von der Position z.B. in der Rufnummer ist. Es kann sich dabei die Betonung einer am Anfang einer Rufnummer stehenden Ziffer von der am Ende einer Rufnummer stehenden Ziffer unterscheiden.

Über die Steuerverbindung werden auch Meldungsblöcke mit Steuerinformationen übertragen. Wenn z.B. die Sprachausgabeschaltung in der Vermittlungstechnik ausgefallen ist, also nicht mehr verfügbar ist, oder eingeschränkt nutzbar ist, kann diese Verfügbarkeitsinformation von der Vermittlungstechnik zur Informationsverarbeitungsschaltung übertragen werden. Die zweite Steuerschaltung ist daher mittels eines Meldungsblocks zur Meldung über die Nutzungseinschränkung oder der Verfügbarkeit der Sprachausgabe an die erste Steuerschaltung vorgesehen. Die erste Steuerschaltung dient dabei zur Auswertung des Meldungsblocks und zur Meldung der Nutzungseinschränkung oder Verfügbarkeit der Sprachausgabe an angeschlossene Auskunftsein- und -ausgabevorrichtungen. Ebenso kann beispielsweise die Verfügbarkeit der Inforamtionsverarbeitungsschaltung an die Auskunftsein- und -ausgabevorrichtungen gemeldet werden.

Zur Durchführung der Kopplung zwischen einem über ein Netz anschlossenes Teilnehmerendgerät und den Auskunftsendgeräten bzw. der Sprachausgabeschaltung dient ein Koppelfeld in der Vermittlungsstelle.

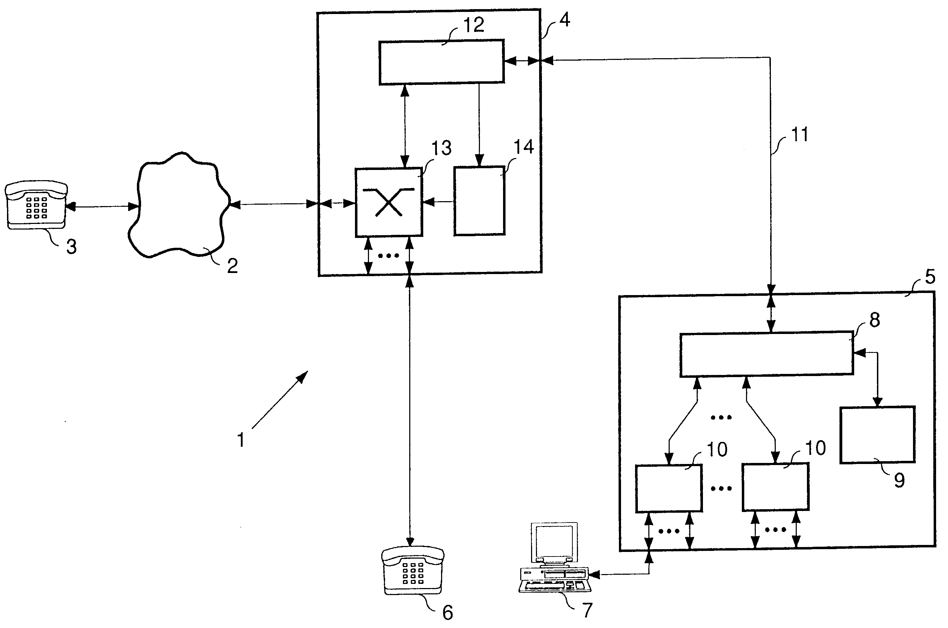

Ein Ausführungsbeispiel einer Auskunftsvorrichtung wird nachstehend anhand der Figur näher erläutert.

Eine Auskunftsvorrichtung 1 (Telefonauskunftsstelle), die über ein Nachrichtennetz 2 mit wenigstens einem Teilnehmerendgerät 3 verbunden ist, enthält eine Vermittlungsstelle 4 und eine Informationsverarbeitungsschaltung 5. Mit der Vermittlungsstelle 4 sind mehrere Auskunftsendgeräte 6 verbunden. Zur Vereinfachung ist in der Figur nur ein einziges Auskunftsendgerät dargestellt. Jedem Auskunftsendgerät 6 ist eine Auskunfts- und -ausgabevorrichtung 7 zugeordnet, die an die Informationsverarbeitungsschaltung 5 angeschlossen ist. Zur Vereinfachung ist ebenfalls nur eine Auskunftsein- und -ausgabevorrichtung 7 dargestellt.

Die Informationsverarbeitungsschaltung 5 enthält eine erste Steuerschaltung 8, einen Speicher 9 (Datenbank) und mehrere Schnittstellenschaltungen 10. Mit den Schnittstellenschaltungen 10 sind jeweils die Auskunftsein- und -ausgabevorrichtungen 7 gekoppelt. Die erste Steuerschaltung 8 ist ebenfalls mit den Schnittstellenschaltungen 10 und mit dem Speicher 9 verbunden. Nachrichten oder Daten zwischen der Informationsverarbeitungsschaltung 5 und der Vermittlungsstelle 4 werden über eine Steuerverbindung 11 übertragen.

Die Vermittlungsstelle 4 enthält eine zweite Steuerschaltung 12, ein Koppelfeld 13 und eine Sprachausgabeschaltung 14. Das Koppelfeld 13 ist mit den Auskunftsendgeräten 6, mit der Sprachausgabeschaltung 14 und dem Nachrichtennetz 2 gekoppelt. Gesteuert wird das Koppelfeld 13 und die Sprachausgabeschaltung 14 von der zweiten Steuerschaltung 12.

Wenn ein Teilnehmer die Auskunft z.B. über eine Rufnummer wünscht, wird von dem Koppelfeld 13 eine Kopplung zwischen einem Teilnehmerendgerät 3 und einem Auskunftsendgerät 6 hergestellt. Weiter könnte der Teilnehmer auch eine Auskunft über Lottozahlen, Wetterbericht, Sportereignisse usw. anfordern. Eine Auskunftskraft gibt Daten in die Auskunftsein- und -ausgabevorrichtung 7 ein, die über eine Schnittstellenschaltung 10 der ersten steuerschaltung 8 zugeführt werden. Die erste Steuerschaltung 8 ermittelt aus dem Speicher 9 die zugeordnete Rufnummer. Diese Rufnummer wird mittels eines Meldungsblocks über die Steuerverbindung 11 zur zweiten Steuerschaltung 12 übermittelt. Die zweite Steuerschaltung 12 sendet an die Sprachausgabeschaltung 14 eine Ansageabfolge, die in ein Sprachsignal umgesetzt wird. Gleichzeitig steuert die zweite Steuerschaltung 12 das Koppelfeld 13 so, daß dieses eine Verbindung zwischen dem Teilnehmerendgerät 3 und der Sprachausgabeschaltung 14 durchführt. Von der Sprachausgabeschaltung 14 kann dann das Sprachsignal dem Teilnehmer zu seinem Teilnehmerendgerät 3 zugeführt werden.

Die bisher geschilderten Komponenten der Auskunftsvorrichtung erfüllen noch weitere Funktionen, die für das Verständnis der Erfindung aber nicht wesentlich sind. Außerdem können auch noch weitere Schaltungsteile in der Auskunftsvorrichtung vorhanden sein.

Die Informationsverarbeitungsschaltung 5 kann der Vermittlungsstelle 4 mittels der Meldungsblöcke die Information darüber zuleiten, ob ein Eintrag im Speicher 9 vorhanden ist, oder die Rufnummer des Teilnehmers mit der Ortsnetzkennzahl. Weiter kann auch eine Telefax-Rufnummer, die dazugehörige Ortsnetzkennzahl und/oder die Geräteklasse des Telefaxgerätes übertragen werden. Die Übertragung weiterer Informationen ist denkbar. Im Meldungsblock ist zumindest die Meldungsart (hier: Rufnummernübermittlung), das Ziel des Meldungsblocks (hier: Vermittlungsstelle 4), eine Ansagekennung und die Rufnummer beispielsweise mit Ortsnetzkennzahl (Parameter) enthalten. Die Ansagekennung gibt den Typ einer Ansage an und identifiziert damit eine Ansagestruktur. Beispielsweise kann die Ansagekennung aus zwei Binärzeichen oder Ziffern bestehen. Für die Information, daß kein Eintrag vorhanden ist, könnte die Ansagekennung "00" vergeben werden. Für die Ansage einer Rufnummer mit Ortsnetzkennzahl eines Telefonanschlusses kann die Ansagekennung "01" gewählt sein. Die Rufnummer eines Telefaxanschlusses mit Nennung der Ortsnetzkennzahl und der Geräteklasse des Telefaxgerätes kann die Ansagekennung "03" aufweisen.

In dem Meldungsblock wird also die Ansagekennung mit mehreren Parametern (Rufnummer, Ortsnetzkennzahl etc.) zur Vermittlungsstelle 4 übertragen. In der zweiten Steuerschaltung 12 werden die von der Informationsverarbeitungsschaltung 5 empfangenen Meldungsblöcke ausgewertet. Fur jede Ansagekennung ist in der zweiten Steuerschaltung 12 eine bestimmte Ansageabfolge abgespeichert. Diese Ansageabfolge besteht aus festen und variablen Ansageabfolgeteilen. Eine Ansageabfolge für die Ansage einer Rufnummer mit Ortsnetzkennzahl kann folgendermaßen aus Ansageabfolgeteilen zusammengesetzt sein:
"RN - R - WH - R - OK - O - RN - R - OK - O - WA".

Die festen Ansageabfolgeteile haben folgende Bedeutung:
- RN =: "die gewünschte Rufnummer lautet"
- WH =: "ich wiederhole"
- OK =: "die Ortsnetzkennzahl lautet"
- WA =: "falls Sie weitere Auskünfte wünschen, bleiben Sie bitte am Telefon".

Die variablen Ansageabfolgeteile haben folgende Bedeutung:
- R =: Rufnummer
- O =: Ortsnetzkennzahl.

Wenn kein Eintrag für eine Rufnummer vorliegt, kann die Ansageabfolge den folgenden Aufbau aufweisen:
"KE - WA".

Diese Ansage besteht nur aus festen Ansageabfolgeteilen. Diese haben folgende Bedeutung:
- KE =: "für den betreffenden Teilnehmer ist leider kein Eintrag vorhanden"
- WA =: "falls Sie weitere Auskünfte wünschen, bleiben Sie bitte am Telefon".

Die Ansageabfolgeteile können in der zweiten Steuerschaltung 12 auch anders zusammengesetzt und auch geändert werden, ohne daß der Meldungsblock geändert werden muß. Die Ansageabfolge wird der Sprachausgabeschaltung 14 zugeführt, die daraus ein Sprachsignal bildet. Für die festen Ansageabfolgeteile sind Sprachfragmente, d.h. aufgezeichnete Sprache, abgespeichert. Ebenso sind aufgezeichnete Ziffern, Buchstaben und Textteile als Sprachfragmente in der Sprachausgabeschaltung 14 abgespeichert. Diese Sprachfragmente werden in der Sprachausgabeschaltung 14 zu einem Sprachsignal zusammengesetzt.

Die variablen Ansageabfolgeteile enthalten Codierungen über die Sprachpausen zwischen den Ziffern und den Buchstaben. Ferner kann in den variablen Ansageabfolgeteilen noch jeweils eine Codierung über die Betonung der Ziffern und Buchstaben enthalten sein. Die Betonung der Ziffern und Buchstaben hängt dabei von ihrer Position in der Rufnummer oder der Ortsnetzkennzahl ab. Diese Position ermittelt die Steuerschaltung 12. In der Sprachausgabeschaltung 14 sind mehrere Sprachfragmente für die gleichen Ziffern und Buchstaben mit jeweils einer unterschiedlichen Betonung abgelegt. Wenn für eine Ziffer und einen Buchstaben jeweils drei Betonungsvarianten vorhanden sind, kann jeder Buchstabe und jede Ziffer durch drei Codeworte in einem variablen Ansageabfolgeteil codiert werden. Beispielsweise können die Ziffern 0 bis 9 durch die Codeworte "159" bis "188" codiert werden. Eine erste Betonung der Ziffern wird durch die Codeworte "159" bis "168", eine zweite Betonung durch die Codeworte "169" bis "178" und eine dritte Betonung durch die Codeworte "179" bis "188" gegeben.

Wenn die Sprachausgabe in der Vermittlungstelle 4 in ihrer Benutzbarkeit eingeschränkt (Störung) ist, wird dies der Informationsverarbeitungsschaltung 5 über einen von der zweiten Steuerschaltung 12 generierten Meldungsblock mitgeteilt. Dieser Meldungsblock weist ebenfalls zumindest das Ziel des Meldungsblocks (Informationsverarbeitungsschaltung 5), die Meldungsart (Störungsmeldung) und die Information, daß eine Störung vorhanden ist, und gegebenenfalls die Information über die Art und den Ort der Störung auf. Der Meldungsblock gibt somit an, daß die Sprachausgabe entweder eingeschränkt ist oder nicht zur Verfügung steht. In der ersten Steuerschaltung 8 wird der empfangene Meldungsblock ausgewertet und an die Auskunftsein- und -ausgabevorrichtungen 7 die Nichtverfügbarkeit der Sprachausgabe gemeldet.

## Patentansprüche

1. Auskunftsvorrichtung (1) mit einer Vermittlungsstelle (4), die zur Kopplung wenigstens eines Teilnehmerendgeräts (3) mit entweder einem Auskunftsendgerät (6) und/oder einer Sprachausgabeschaltung (14) vorgesehen ist und mit einer Informationsverarbeitungsschaltung (5), die
- über eine Steuerverbindung (11) mit der Vermittlungsstelle (4) gekoppelt ist,
- zur Auswertung von von wenigstens einer Auskunftsein- und -ausgabevorrichtung (7) eingegebenen Daten,
- zur Bildung von wenigstens einer Ansageinformation für das Teilnehmerendgerät (3) und
- zur Zuführung der Ansageinformation zur Vermittlungsstelle (4) vorgesehen ist,
dadurch gekennzeichnet,
daß die Informationsverarbeitungsschaltung (5) zur Einfügung einer Ansagekennung und/oder von Parametern in einen Meldungsblock vorgesehen ist,
daß die Vermittlungsstelle (4) nach Auswertung eines Meldungsblocks anhand der Ansagekennung und/oder der Parameter zur Bildung einer Ansageabfolge und zur Zuführung der Ansageabfolge zur in der Vermittlungsstelle (4) enthaltenen Sprachausgabeschaltung (14) vorgesehen ist und
daß die Sprachausgabeschaltung (14) zur Zusammenfügung von Sprachfragmenten zu einem Sprachsignal nach der Bildungsvorschrift in der Ansageabfolge vorgesehen ist.

2. Auskunftsvorrichtung nach Anspruch 1,
dadurch gekennzeichnet,
daß eine erste steuerschaltung (8) in der Informationsverarbeitungsschaltung (5) zur Entnahme von gespeicherten Parametern aus einem Speicher (9) und zur Bildung eines Meldungsblocks vorgesehen ist.

3. Auskunftsvorrichtung nach Anspruch 2,
dadurch gekennzeichnet,
daß eine zweite Steuerschaltung (12) in der Vermittlungsstelle (4) zur Auswertung des Meldungsblocks, zur Bildung einer Ansageabfolge mit wenigstens einem festen und/oder einem variablen Ziffern, Buchstaben und/oder Textteilen enthaltenden Ansageabfolgeteil und zur Zuführung der Ansageabfolge zur Sprachausgabeschaltung (14) vorgesehen ist.

4. Auskunftsvorrichtung nach Anspruch 3,
dadurch gekennzeichnet,
daß die zweite Steuerschaltung (12) zur Bildung der Ansageabfolge mit mehreren festen und/oder variablen in beliebiger Reihenfolge und mehrfach auftretenden Ansageabfolgeteilen vorgesehen ist.

5. Auskunftsvorrichtung nach Anspruch 4,
dadurch gekennzeichnet,
daß die zweite Steuerschaltung (12) zur Ermittlung der Positionen wenigstens der Ziffern und/oder Buchstaben der Parameter und
zur Bildung des variablen Ansageabfolgeteils zusätzlich mit Informationen über die vorzunehmende von der Position einer Ziffer abhängigen Betonung vorgesehen ist.

6. Auskunftsvorrichtung nach Anspruch 5,
dadurch gekennzeichnet,
daß die zweite Steuerschaltung (12) mittels eines Meldungsblocks zur Meldung über die Nutzungseinschränkung oder Verfügbarkeit der Sprachausgabe an die erste Steuerschaltung (8) vorgesehen ist und
daß die erste Steuerschaltung (8) zur Auswertung des Meldungsblocks und zur Meldung der Nutzungseinschränkung oder Verfügbarkeit der Sprachausgabe an angeschlossene Auskunftsein- und -ausgabevorrichtungen (7) vorgesehen ist.

7. Auskunftsvorrichtung nach einem der vorhergehenden Ansprüche,
dadurch gekennzeichnet,
daß die zweite Steuerschaltung (12) zur Steuerung eines Koppelfeldes (13) in der Vermittlungsstelle (4) vorgesehen ist.
